(19) Europäisches Patentamt
European Patent Office
Office européen des brevets

(11) **EP 2 565 799 A1**

(12) **EUROPEAN PATENT APPLICATION**

(43) Date of publication:
**06.03.2013 Bulletin 2013/10**

(51) Int Cl.:
*G06F 17/30* (2006.01)  *G06K 9/20* (2006.01)

(21) Application number: **11179683.5**

(22) Date of filing: **01.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Universität Innsbruck
6020 Innsbruck (AT)**

(72) Inventors:
• **Gander, Lukas
6020 Innsbruck (AT)**

• **Lezuo, Cornelia
6020 Innsbruck (AT)**
• **Unterweger, Raphael
6020 Innsbruck (AT)**
• **Mühlberger, Günther
6020 Innsbruck (AT)**

(74) Representative: **Horn Kleimann Waitzhofer
Elsenheimerstrasse 65
80687 München (DE)**

(54) **Method and device for generating a fuzzy rule base for classifying logical structure features of printed documents**

(57)     In a first step, character recognition features are provided from a certain printed document. In a second step, a number of physical structure features is determined on the basis of the provided character recognition features. This second step is done for each line of the certain printed document. In a third step, training data including an input-output sample are provided, wherein the input is represented by the number of physical structure features and the output is represented by a manually labelled logical structure feature. This third step is done for each line of the certain printed document. In a fourth step, a distribution for each physical structure feature in the certain printed document is determined. In a fifth step, a fuzzy set having linguistic variables and corresponding membership degrees is provided on the basis of the respective calculated distribution; This fifth step is done for each line and for each physical structure feature. In a sixth step, for each line and for each physical structure feature, selecting the linguistic variable with the maximum membership degree. This sixth step is done for each line and for each physical structure feature. In a seventh step, a fuzzy rule for the fuzzy rule base is generated on the basis of the input-output frame, wherein the respective physical structure feature of the input is represented by the corresponding selected linguistic variable with its membership degree and the output is represented by the manually labelled logical structure feature. This seventh step is done for each line.

Fig. 1

**Description**

FIELD OF THE INVENTION

The invention relates to a method and to a device for generating a fuzzy rule base for classifying logical structure features of printed documents. Further, the invention relates to a method and to a device for classifying a particular printed document by logical structure features.

BACKGROUND

In the past, a lot of effort was put into mass digitization projects, for example Google Book Search, the MillionBook project and the Open Content Alliance (OCA). These projects are producing a tremendous amount of data, which may raise some interesting challenges in the environment of a digital library.

Whilst Optical Character Recognition (OCR) is a quite mature area of research, and, concerning modern printed documents, may be considered as a solved problem, there are still a lot of open challenges in the field of document analysis and document understanding (see reference [16]). One of the challenges within this area may be the analysis and reconstruction of logical structures or logical structure features in given documents. Logical structure analysis is focused on defining a mapping of physical structure features or entities, such as words, lines or paragraphs, to logical structure entities or features, such as headings, footnotes or page numbers.

For example, since Google published millions of books online, the need for automated document image understanding systems is rapidly growing in particular from the perspective of libraries. The libraries recognized that having digitized images in combination with the related full texts, the development of useful information retrieval applications is possible.

However, as soon as libraries may provide more complex use cases than simple text search, the knowledge about the logical structure of documents is needed. Such complex information retrieval use cases may be for example: browsing through the book using a linked Table of Contents, providing a linked Table of Contents even though the Table of Contents was not printed within the book, or improving indexing of documents by using the logical structure of documents.

For example, headings carry more information than running text, wherein footnotes do normally not enrich the content. Taking into account the knowledge about the logical elements of documents during the indexing process may improve the process of knowledge discovery. A further example may be the increasing popularity of mobile devices, such as tablet PCs and smart phones, which also opens up new possibilities in the area of digital libraries. The transformation of a raw OCR text into eBook formats is challenging regarding correctly representing the structural information of documents needed by these formats. Further, users are usually not only interested in a single document, but also in documents which are referenced by a certain document. Identifying, resolving and linking the references within a book to the concerned documents may allow the user a more intuitive way of knowledge discovery.

STATE OF THE ART

The literature surveys of Chen et al. (see reference [1]) and Mao et al. (see reference [12]) give a review of the research done in the area of logical word analysis. Besides the fact that most approaches differ in the choice of the analyzed document type, like newspapers, scientific papers, books or the like, they vary in the application of the theoretical model, in the choice of the algorithms and in the selection of the document features as used in reference [1].

Regarding the choice of the document space, it shall be mentioned that books, as a document space, are rarely covered so far. Mentionable in this context are the approach by Lin et al. (see reference [10]) and the approaches by Dresevic et al. (see reference [4]) and Déjean et al. (see reference [2]) which were submitted to the Book structure competition held at ICDAR 2009 (see reference [3]). These approaches have in common that they try to reconstruct the logical structure of a book by detecting and analyzing the pages containing the table of contents of the book.

With regard to the application of the theoretical model, the research summaries of Chen and Mao primarily distinguish between rule- and grammar-based approaches. In terms of numbers, the rule-based approaches prevail. Most of the rule-based approaches are characterized by the knowledge specific to the application (domain knowledge) of experts being used to code the rule base manually. Rule-based approaches applying expert knowledge were used by Niyogi et al. (see reference [14]), Kim et al. (see reference [6]), Klink et al. (see reference [7]) and Lin et al. (see reference [10]). The approaches of Niyogi, Kim and Lin are based on the classical Boolean Logic, wherein Klink et al. are proposing a fuzzy logic approach.

Moreover, manually created rule systems show a static behavior. This means that their intended purpose is to the designated area of application. Generally, they are not capable of reacting appropriately to new challenges and, by implication, cannot be adapted for a new area of application (see reference [1]). For this reason, there have been numerous efforts to develop systems capable of learning rules automatically from manually annotated training data. Systems built on a self-learning system are presented by Laven et al. (see reference [9]) and Esposito et al. (see reference [5]).

Approaches based on formal grammars are different compared to rule-based approaches. They try to derive valid parse trees for an input string by using formal grammar rules, wherein rule-based systems define actions which have to be taken if certain premises are fulfilled. Most of the grammar-based approaches are context-free grammar systems (see references [8] and [13]). An advantage of these approaches may be that the number of valid derivatives is strongly limited by the definition of a formal grammar. Every electronic document is regarded as a sequence of physical components, like words, lines, and the like. Based on a starting character, in due consideration of the formal grammar, derivatives are generated until no further derivatives are possible any longer. One problem with grammar-based approaches is to resolve potential ambiguities of a context-free grammar. An ambiguous grammar is identified by the fact that several correct derivatives can be generated for one and the same input. To resolve ambiguities, Namboodiri et al. (see reference [13]) provides a stochastic context free grammar to describe the structure of documents.

BRIEF SUMMARY OF THE INVENTION

According to a first aspect of the invention, a method for generating a fuzzy rule base for classifying logical structure features of printed documents is suggested. The method comprises the following steps: In a first step, character recognition features are provided from a certain printed document. In a second step, a number of physical structure features is determined on the basis of the provided character recognition features. This second step is done for each line of the certain printed document. In a third step, training data including an input-output sample are provided, wherein the input is represented by the number of physical structure features and the output is represented by a manually labelled logical structure feature. This third step is done for each line of the certain printed document. In a fourth step, a distribution for each physical structure feature in the certain printed document is determined. In a fifth step, a fuzzy set having linguistic variables and corresponding membership degrees is provided on the basis of the respective calculated distribution. This fifth step is done for each line and for each physical structure feature. In a sixth step, for each line and for each physical structure feature, the linguistic variable with the maximum membership degree is selected. This sixth step is done for each line and for each physical structure feature. In a seventh step, a fuzzy rule for the fuzzy rule base is generated on the basis of the input-output frame, wherein the respective physical structure feature of the input is represented by the corresponding selected linguistic variable with its membership degree and the output is represented by the manually labelled logical structure feature. This seventh step is done for each line.

According to some implementations, a hybrid fuzzy rule-based method is provided which uses a combination of hand-coded rules and a set of machine-learned fuzzy rules, in order to reconstruct the logical structure of printed documents, like books. An advantage of applying a hand-coded rule base is that some of the logical structure features may be found easily and more precisely by defining a set of hand-coded rules. The knowledge about some of the physical structure features like page numbers or page headers is well-known and does not have to be derived exhaustingly by a learning algorithm. For example, page numbers are often placed either on top or at the bottom of a page. Regarding the horizontal alignment, page numbers have an attitude that they are either centered or alternating on the left or the right side of a page. For other logical structure features or types, the domain knowledge may be not so obvious. Another advantage of the decision to limit the number of the structure features or types for which rules are generated automatically, is that the selection of the features which serve as input for the learning algorithm is eased and narrowed.

Further, according to some implementations, rule-based and grammar-based procedures are aggregated. Rule-based representations may be powerful, but may tend to become complex and frequently develop a life of their own. Moreover, it may be challenging to encode semantic and syntactic relations among logical components in a reasonable way within the rule base. This limitation of rule-based systems may be a huge handicap since it is indisputable that the logical elements within a document are printed on a page following a clear formal grammar. To overcome this, the rule-based system is augmented with grammar-based procedures.

According to some implementations, the present hybrid fuzzy classification method may be used for understanding documents. Further, according to some implementations, the power of manually encoded rules by using domain knowledge may be combined with the flexibility of a learning mechanism which may provide an automated way to learn rules from a set of manually labelled training samples.

In an embodiment, the fuzzy sets for the respective physical structure feature have a set of linguistic variables and corresponding membership functions being calculated on the basis of the respective distribution of the physical structure feature. The respective membership degree of the respective linguistic variable is determined by applying the membership function to the respective determined physical structure feature in the respective line.

In a further embodiment, if the generated fuzzy rules include conflicting rules, the conflicting rules are resolved by means of a minimum T-norm.

In a further embodiment, a rule degree $D_{rule}$ is calculated by the minimum T-norm $D_{rule} = \min(m_{A1}(x_1), m_{A2}$

$(x_2),...,m_{Aj}(x_i))$ for each conflicting rule. Here, $m_{Aj}(x_i)$ denotes the membership degree for the physical structure feature $x_i$ concerning the fuzzy set Aj .

In a further embodiment, the generated fuzzy rules are If-Then-rules. In this regard, such conflicting rules having an equal If-part are grouped into one group. In each group, one conflicting rule of the grouped conflicting rules is selected for the fuzzy rule base based on a voting scheme.

Particularly within the voting scheme, each conflicting rule of the grouped conflicting rules votes for its Then-part with its calculated rule degree $D_{rule}$.

In a further embodiment, a precision value is calculated for the respective selected conflicting rule. The precision value may correspond to a quotient of the votes for the selected conflicting rules within the group and a total number of votes within the group.

In a further embodiment, the number of physical structure features for each line includes a distance to the previous line, a distance to the subsequent line, a left indent of the line, a centering of the line, a length of the line, a number of lines within the same text block, a distance of the text block containing the line to the previous text block, a distance of the text block containing the line to the subsequent text block, and an average surface area of a character within the line.

In a further embodiment, the logical structure features include a page number, a page header, a signature-mark, a text, a foot note and a heading.

Any embodiment of the first aspect may be combined with any embodiment of the first aspect to obtain another embodiment of the first aspect.

According to a second aspect, the invention relates to a computer program comprising a program code for executing the above-mentioned method for generating a fuzzy rule base for classifying logical structure features of printed documents when run on at least one computer.

According to a third aspect of the invention, a device for generating a fuzzy rule base for classifying logical structure features of printed documents is suggested. The device comprises first means, second means, third means, fourth means, fifth means, sixth means, and seventh means. Said first means are configured to provide character recognition features from a certain printed document. Said second means are configured to determine a number of physical structure features on the basis of the provided character recognition features for each line of the certain printed document. Said third means are configured to provide training data including an input-output sample for each line of the certain printed document, wherein the input is represented by the number of physical structure features and the output is represented by a manually labelled logical structure feature. Said fourth means are configured to determine a distribution for each physical structure feature in the certain printed document. Said fifth means are configured to provide a fuzzy set having linguistic variables and corresponding membership degrees on the basis of the respective calculated distribution for each line and for each physical structure feature. Said sixth means are configured to select the linguistic variable with the maximum membership degree for each line and for each physical structure feature. Further, said seventh means are configured to generate a fuzzy rule for the fuzzy rule base on the basis of the input-output frame for each line. The respective physical structure feature of the input is represented by the corresponding selected linguistic variable with its membership degree and the output is represented by the manually labelled logical structure feature.

The respective means may be implemented in hardware or in software. If said means are implemented in hardware, it may be embodied as a device, e.g. as a computer or as a processor, or as a part of a system, e.g. a computer-system. If said means are implemented in software, it may be embodied as a computer program product, as a function, as a routine, as a program code or as an executable obj ect.

According to a fourth aspect, the invention relates to a method for classifying a particular printed document by logical structure features. In a first step, a fuzzy rule base including fuzzy rules is generated by the method of above first aspect. In a second step, character recognition features are provided from the particular document. In a third step, a distribution for each physical structure feature is determined in the particular printed document. In a fourth step, for each line and for each physical structure feature, a fuzzy set with the linguistic variables and the corresponding membership degrees is provided on the basis of the respective calculated distribution. In a fifth step, each line of the particular printed document is provided with one label for each of the logical structure features. In a sixth step, for each line, one label of the provided labels is selected based on physical layout data on the logical structure features and a voting procedure within each paragraph of the particular document.

In one embodiment, said fifth step may include the following three sub steps. In a first sub step, the rule degree is calculated by the minimum T-norm of each fuzzy rule, for each line and for fuzzy rule. In a second sub step, a confidence value of the label is calculated based on the calculated rule degree and the precision value of the fuzzy rule, for each line and for each label. In a third sub step, for each line and for each label, the label with the calculated maximum confidence value is selected.

In a further embodiment, the physical layout data on the logical structure features is generated in dependence on the provided character recognition features.

In a further embodiment, for each line, one label of the provided labels is selected based on the physical layout data on the logical structure features, the voting procedure within each paragraph of the particular printed document and on a Deterministic Finite Automaton (DFA) providing allowed sequences of logical structure features.

Any embodiment of the fourth aspect may be combined with any embodiment of the fourth aspect to obtain another embodiment of the fourth aspect.

According to a fifth aspect, the invention relates to a computer program comprising a program code for executing the above-mentioned method for classifying a particular printed document by logical structure features when run on at least one computer.

According to a sixth aspect, a device for classifying a particular printed document by logical structure features is suggested. This device includes a device for generating a fuzzy rule base including fuzzy rules according to above third aspect. Moreover, this device has a first entity, a second entity, a third entity, a fourth entity, and a fifth entity. The first entity is configured to provide character recognition features from the particular document. The second entity is configured to determine a distribution for each physical structure feature in the particular printed document. The third entity is configured to provide a fuzzy set with the linguistic variables and the corresponding membership degrees on the basis of the respective calculated distribution for each line and for each physical structure feature. The fourth entity is configured to provide each line of the particular printed document with one label for each of the logical structure features. The fifth entity is configured to select one label of the provided labels based on physical layout data on the logical structure features and a voting procedure within each paragraph of the particular document for each line.

The respective entity may be implemented in hardware or in software. If said entity is implemented in hardware, it may be embodied as a device, e.g. as a computer or as a processor, or as a part of a system, e.g. a computer-system. If said entity is implemented in software, it may be embodied as a computer program product, as a function, as a routine, as a program code or as an executable obj ect.

In the following, exemplary embodiments of the present invention are described with reference to the enclosed figures.

BRIEF DESCRIPTION OF THE DRAWING

Fig. 1    shows an embodiment of a sequence of method steps for generating a fuzzy rule base for classifying logical structure features of printed documents,

Fig. 2    shows an example of a determined distribution of a physical structure feature,

Fig. 3    shows an example of fuzzy sets provided on the basis of the distribution of Fig. 2,

Fig. 4    shows a schematic block diagram of an embodiment of a device for generating a fuzzy rule base for classifying logical structure features of printed documents,

Fig. 5    shows an embodiment of a sequence of method steps for classifying a particular printed document by logical structure features, and

Fig. 6    shows a schematic block diagram of an embodiment of a device for classifying a particular printed document by logical structure features.

Similar or functionally similar elements in the figures have been allocated the same reference signs if not otherwise indicated.

DETAILED DESCRIPTION OF THE EMBODIMENTS

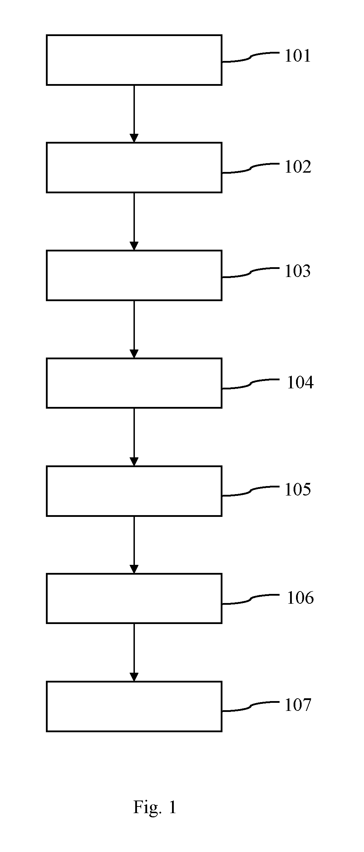

In Fig. 1, an embodiment of a sequence of method for generating a fuzzy rule base for classifying logical structure features of printed documents is depicted. The method comprises the following steps:

In step 101, character recognition features are provided from a certain printed document. In step 102, a number of physical structure features is determined on the basis of the provided character recognition features. This step 102 is done for each line of the certain printed document.

In step 103, training data including an input-output sample are provided, wherein the input is represented by the number of physical structure features and the output is represented by a manually labelled logical structure feature. This step 103 is done for each line of the certain printed document. In step 104, a distribution for each physical structure feature in the certain printed document is determined.

In step 105, a fuzzy set having linguistic variables and corresponding membership degrees is provided on the basis of the respective calculated distribution. This step 105 is done for each line and for each physical structure feature.

In step 106, for each line and for each physical structure feature, the linguistic variable with the maximum membership degree is selected. This step 106 is done for each line and for each physical structure feature.

In step 107, a fuzzy rule for the fuzzy rule base is generated on the basis of the input-output frame, wherein the respective physical structure feature of the input is represented by the corresponding selected linguistic variable with its membership degree and the output is represented by the manually labelled logical structure feature. This step 107 is done for each line.

The following may give an illustrative example for above steps 101 to 107.

The step 101 may include several pre-processing steps. For example, the scanned images of the certain printed document are automatically deskewed and then OCR-processed, for example by ABBYY FineReader 9. Said ABBYY FineReader 9 as an example for an OCR engine may provide much more information about the image and the text than a conventional simple text output. Said more information may particularly include coordinates of physical layout structures, such as blocks, lines, strings or characters, types of blocks, e.g. text, picture or table, language information, for example English or German, and formatic information, such as bold, italic or underlined, for example.

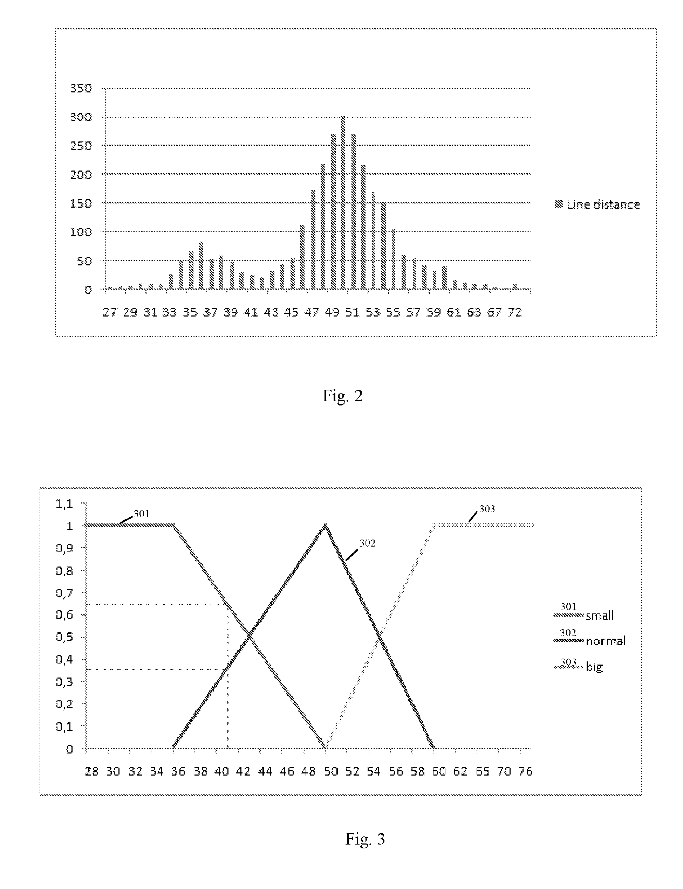

After step 101, and in particular after said above-described pre-processing steps, the information provided by the OCR process may be used to compute the features needed for the logical structure analysis, the so-called physical structure features. First, the features for each physical line are computed independently and afterwards aggregated over the whole document as outlined in Fig. 2. In particular, Fig. 2 shows an example of a determined distribution of the physical structure feature "line distance".

The information about the distribution of the features over the whole document may then be used to classify the values of the features into some classes and denoted by linguistic variables. For example, the following nine physical structure features of a line as most relevant may be identified in order to distinguish between different structure types:

$x_1$ = Distance to the previous line
$x_2$ = Distance to the subsequent line
$x_3$ = Left indent of the line
$x_4$ = Centering of the line
$x_5$ = Length of the line
$x_6$ = Number of lines within the same text block
$x_7$ = Distance of the text block containing the reviewed line, to the previous text block
$x_8$ = Distance of the text block containing the reviewed line, to the subsequent text block
$x_9$ = average surface area of a character within the reviewed line

In the present case, due to the nature of the digitization process, a fuzzy logic approach may be more appropriate than classic Boolean logic, see for example reference [7]. During the scan process, several flaws may occur, which may make it difficult to decide if the distance between two consecutive lines is "normal", "big" oder "small". Scanned pages may be skewed or the scan panel may not always have the same distance to the digitized document page which results in the consequence that the definition of "normal" may not be formulated precisely. In this regard, fuzzy logic may handle such uncertainties. In classic Boolean logic, the membership of a value to a specific set may only be expressed by "true" or "false". In contrast, fuzzy logic allows defining the membership of a value to a set using any number between 0 and 1.

Considering the distribution as shown in Fig. 2, it may be clear that a distance between two lines of 50 pixels may be considered as "normal". Likewise, it may be quite obvious that a line distance of 36 pixels may be identified as a "small" line distance, for example. For a line distance of 41 pixels, it may be not that obvious and it may be difficult to decide if classical Boolean logic is used. Fuzzy logic may be a robust procedure to overcome such challenges exactly.

Moreover, Fig. 3 shows an example of fuzzy sets provided on the basis of the distribution of Fig. 2. In particular, Fig. 3 shows a fuzzy partition of the input domain by using triangular membership functions. These membership functions are used to compute the degree of membership for a line distance, considering all defined fuzzy sets. A distance of 41 pixels between two consecutive lines may be considered to be "small" with a degree of 0.65, to be "normal with a degree of 0.35 and to be "big" with a degree of 0. A further advantage of using fuzzy logic is the fact that fuzzy logic may handle incomplete rule sets since each feature value can be a member of several sets. This may have the effect that for each data sample the premise for more than one rule may be fulfilled. It is very likely that not all combinations of the different features may be covered by the rule set due to lack of training data.

One goal of the present automated fuzzy rule learning procedure is to derive a mapping function from a set of manually labelled training data, which assigns an output to new, previously unknown data samples. For example, suppose a given set of manually labelled input-output data samples of the form:

$$(x_1, x_2, \ldots, x_i, y)$$

It may be noted that input variables are numerical values concerning the listed physical structure features in the above. Hence the data sample (36, 41, 5, 0.3, 951, 4, 35, 38, 25.324; footnote) represents an annotated line from the ground truth data with the following attributes:

$x_1$ = Distance of 36 pixels to the previous line,
$x_2$ = Distance of 41 pixels to the subsequent line,
$x_3$ = Left indent of 5 pixels,
$x_4$ = 0.3 degree of centering,
$x_5$ = Length of 951 pixels,
$x_6$ = Sharing the same text block with 4 other lines,
$x_7$ = Distance of 35 pixels of the text block, containing the reviewed line, to the previous text block,
$x_8$ = Distance of 38 pixels of the text block, containing the reviewed line, to the subsequent text block,
$x_9$ = Average surface area of 25.324 square pixels needed for one character in said line,
$y$ = Manually labelled as footnote.

Regarding above output, there are two representation strategies in fuzzy logic, namely the Mamdami-rules (see reference [11]) and the Takagi-Sugeno-rules (see reference [15]). In Mamdami fuzzy rules, the output is also represented by a fuzzy set. In contrast, in Takagi-Sugeno fuzzy rules, functions of input variables are used as the rule consequent. In particular, within the present method, zero-order Takagi-Sugeno fuzzy rules are learned which means that the output is a constant function. So, the numerical input variables are transformed into linguistic variables, and a set of rules of the following form is learned:

$$(x_1', x_2', \ldots x_i') \rightarrow y$$

where $x_i'$ denotes the fuzzificated linguistic value for the numeric value $x_i$. For this purpose, a variation of the Wang & Mendel algorithm is used (see reference [17]). The Wang & Mendel algorithm is designed to generate fuzzy rules from numerical data. It consists of a first step for dividing the input space into fuzzy regions, a second step for generating fuzzy rules from given data, a third step for assigning a degree to each rule and a fourth step for creating a combined fuzzy rule base.

In the first step, the domain intervals of the relevant physical structure features are divided into several fuzzy regions. This may be achieved by computing the distribution of the different physical structure features over the whole document. The distribution of the respective physical structure feature is then used to define the fuzzy sets and to compute the corresponding membership functions. The membership functions may be computed for each document individually. The reasons for that are that the value for "normal" may differ from document to document, for example. As mentioned above, this is outlined in Figs. 2 and 3.

In the second step for generating fuzzy rules from given data, the degree of membership for all given input features in the different regions is computed. For each input feature, only the fuzzy set with maximum membership is selected and therefore considered (see above step 106).

For the example of Fig. 3, only the value for a small" line distance with a degree 0.65 is considered.

Then, a fuzzy rule is computed for all ground truth data samples by using the fuzzyfication procedure for the input features and by associating the manually labelled value as the consequence of the rule. The input-output sample from the beginning of this section may be converted into the following fuzzy rule:

IF
$x_i'$ is small AND
$x_2'$ is small AND
$x_9'$ is small
.
.
.

THEN y =footnote

where $x_1'$, $x_2'$, ... $x_9'$ denote the linguistic values of the input features listed above. All rules generated are AND rules consisting of the same number of literals.

In step 3 for assigning a degree to each rule, also conflicting rules are handled. Because every data sample generates exactly one rule, it is possible that there are some conflicting rules. A rule is considered to be a conflicting rule, if there exists at least another rule having the same IF part, but a different THEN part. Such conflicts are resolved in order to create an unambiguous rule base. A rule degree $D_{rule}$ is assigned to every conflicting rule to resolve such conflicts.

The rule degree is computed by using the minimum T-norm:
$D_{rule}$= min($m_{A1}(x_1)$, $m_{A2}(x_2)$,...,$m_{Aj}(x_i)$), where $m_{Aj}(x_i)$ denotes the membership degree for the physical structure feature $x_i$ concerning the fuzzy set Aj.

In said fourth step for creating a combined fuzzy rule base, any ambiguity within the rule base may be resolved as follows:

The rules generated in above-mentioned second step are grouped together by their antecedent. To compose the final rule base, a voting procedure is applied where each rule of a group votes for the THEN part with the rule degree computed in said third step. The voting procedure may be more appropriate than nominating the rule with maximum degree as proposed in the Wang & Mendel algorithm. For example, this change prevents a misclassification due to statistically irrelevant instances or wrong labelled instances within the ground truth, since all rules are taken into consideration and not only the rule having maximum degree. Further, a precision value for each winning rule may be computed. The precision of a rule is defined as the sum of votes for the winning rule, divided by the total number of votes within the same antecedent group. The winning rule is stored in the combined rule base together with the computed precision value of the rule (see step 107).

Further, for classifying a particular printed document by logical structure features, each line of the document is provided with one label for each of the logical structure features. Furthermore, for each line, one label is selected.

The labelling of the logical elements is done for each line individually and may be divided into two steps. The first step is characterized by a domain knowledge driven approach which applies hand coded set of rules. These rules are used to identify the instances of structural elements for which the domain knowledge is well known and unambiguous. These structural elements are page numbers, page headers and signature marks, for example.

In the second step, the rules learned using the procedure described above are applied to the lines which have not been labelled during the first labelling step. The labelling, using the learned rule base, may be explained by means of a comprehensive example. For simplicity, only two of the nine characteristics of a line are used in the example. Consider a line $L_1$ with the following features:

$x_1'(L_1)$ is small with a degree of 0.65 and normal with a degree of 0.35
$x_2'(L_1)$ is small with a degree of 0.45 and normal with a degree of 0.55 and the rules from the combined fuzzy rule base:

1. IF $x_1'$ is small AND $x_2'$ is small
THEN y=footnote with precision P = 0.9
2. IF $x_1'$ is small AND $x_2'$ is normal
THEN y=text with precision P = 0.6

First, the degree $D_{R_i}(L_1)$ for each rule regarding the concrete feature values of line $L_1$ is computed. This leads to:

$$D_{R_1}(L_1) = \min(0.65, \ 0.45) = 0.45$$

$$D_{R_2}(L_1) = \min(0.65, \ 0.55) = 0.55$$

Next, the values for the degree of the rule $D_{R_i}(L_z)$ and the precision of the rule $P_{R_i}$ are combined to a confidence value $C_{R_i}(L_z)$ for the assigned label by applying a harmonic mean function:

$$C_{R_i}(L_z) = 2 * D_{R_i}(L_z) * P_{R_i} / (D_{R_i}(L_z) + P_{R_i})$$

applying this function for the confidence of the labels for the outlined example leads to:

$$C_{R_i}(L_1) = 2 * 0.45 * 0.9/(0.45 + 0.9) = 0.60$$

$$C_{R_2}(L_1) = 2 + 0.55 + 0.67(0.55 + 0.6) = 0.57$$

For each different label, the result of the rule having maximum confidence may be stored as an intermediate result. The reviewed line L1 may be labelled as footnote with a confidence of 0.6, as text with a confidence of 0.57 and as heading with a confidence of 0, since there does not exist any rule in the combined rule base whose premise is fulfilled having the consequence heading. The outlined example shows some interesting characteristics of the present fuzzy logic system which may make the system superior to a Boolean logic approach. In Boolean logic for each line the premise of one and only one rule would be fulfilled with the consequence that there would be no result if the corresponding rule is not covered by the rule base. Since in the present fuzzy rule base dozens of rules are evaluated for each line, it may not matter if the rule with the highest degree is covered by the rule base or not. Another advantage of a fuzzy system is that the system is able to derive a useful confidence value for each of the results. Moreover, the harmonic mean function, which is used to compute the confidence of the result, has the ability to boost the outcome of a rule, if a rule has a much higher precision than another rule even if the compared rule has slightly higher degree.

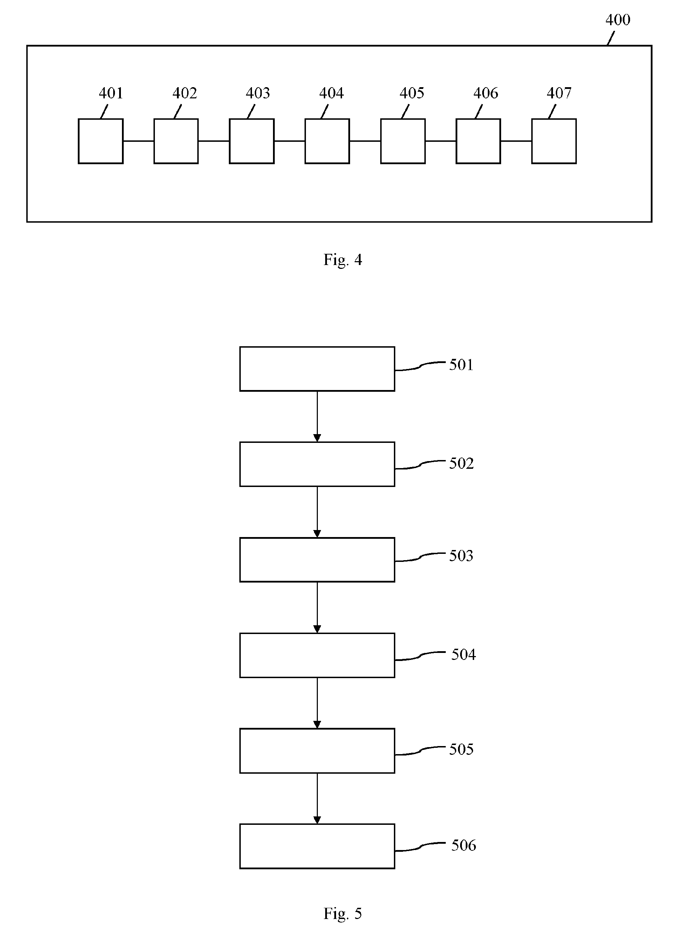

In Fig. 4, a schematic block diagram of an embodiment of a device 400 for generating a fuzzy rule base for classifying logical structure features of printed documents is depicted.

The device 400 comprises first means 401, second means 402, third means 403, fourth means 404, fifth means 405, sixth means 406, and seventh means 407. Said first means 401 are configured to provide character recognition features from a certain printed document. Said second means 402 are configured to determine a number of physical structure features on the basis of the provided character recognition features for each line of the certain printed document.

Said third means 403 are configured to provide training data including an input-output sample for each line of the certain printed document, wherein the input is represented by the number of physical structure features and the output is represented by a manually labelled logical structure feature.

Said fourth means 404 are configured to determine a distribution for each physical structure feature in the certain printed document. Said fifth means 405 are configured to provide a fuzzy set having linguistic variables and corresponding membership degrees on the basis of the respective calculated distribution for each line and for each physical structure feature.

Said sixth means 406 are configured to select the linguistic variable with the maximum membership degree for each line and for each physical structure feature.

Further, said seventh 407 means are configured to generate a fuzzy rule for the fuzzy rule base on the basis of the input-output frame for each line. The respective physical structure feature of the input is represented by the corresponding selected linguistic variable with its membership degree and the output is represented by the manually labelled logical structure feature.

In particular, said seven means 407 are adapted to resolve conflicting rules in the fuzzy rule base by means of a minimum T-norm. In this regard, the seven means 407 may calculate a rule degree $D_{rule}$ by the minimum T-norm $D_{rule} = min(m_{A1}(x_1), m_{A2}(x_2),...,m_{Aj}(x_i))$ for each conflicting rule, where $m_{Aj}(x_i)$ denotes the membership degree for the physical structure feature $x_i$ concerning the fuzzy set Aj.

In particular, if the generated fuzzy rules are IF-THEN-rules, the seven means 407 groups such conflicting rules having an equal IF-part into one group. In each group, the seven means 407 selects one conflicting rule of the grouped conflicting rules for the fuzzy rule base based on a voting scheme. Within the voting scheme, each conflicting of the group conflicting rules votes for its THEN-part with its calculated rule degree $D_{rule}$. Further, said seven means 407 may calculate the precision value for the respective selective conflicting rule. The precision value corresponds to a quotient of the votes for the selected conflicting rules within the group and a total number of votes within the group.

Fig. 5 depicts an embodiment of a sequence of method steps for classifying a particular printed document by logical structure features.

In step 501, a fuzzy rule base including fuzzy rules is generated by the method of Fig. 1. In step 502, character recognition features are provided from the particular document. In step 503, a distribution for each physical structure feature is determined in the particular printed document. In step 504, for each line and for each physical structure feature, a fuzzy set with the linguistic variables and the corresponding membership degrees is provided on the basis of the respective calculated distribution. In step 505, each line of the particular printed document is provided with one label for each of the logical structure features. In step 506, for each line, one label of the provided labels is selected based on physical layout data on the logical structure features and a voting procedure within each paragraph of the particular document.

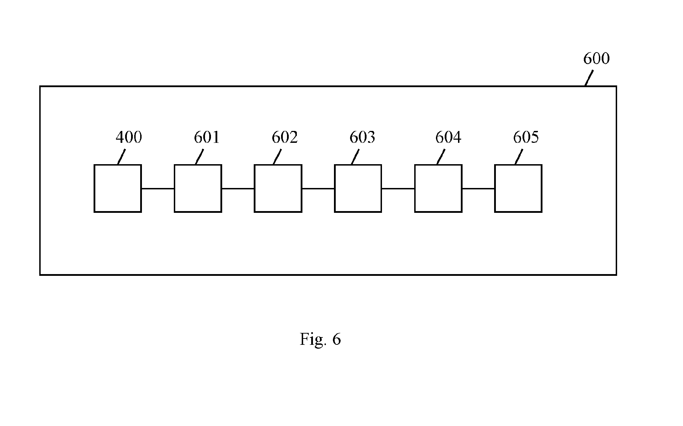

In Fig. 6, a schematic block diagram of an embodiment of a device 600 for classifying a particular printed document by logical structure features is depicted.

This device 600 includes a device 400 for generating a fuzzy rule base including fuzzy rules according to above Fig. 4. Moreover, this device 600 has a first entity 601, a second entity 602, a third entity 603, a fourth entity 604, and a fifth entity 605.

The first entity 601 is configured to provide character recognition features from the particular document. The second entity 602 is configured to determine a distribution for each physical structure feature in the particular printed document. The third entity 603 is configured to provide a fuzzy set with the linguistic variables and the corresponding membership degrees on the basis of the respective calculated distribution for each line and for each physical structure feature. The fourth entity 604 is configured to provide each line of the particular printed document with one label for each of the logical structure features. The fifth entity 605 is configured to select one label of the provided labels based on physical layout data on the logical structure features and a voting procedure within each paragraph of the particular document for each line.

All above-mentioned embodiments of the device of the present invention may be embodied by respective steps to be a respective embodiment of the method of the present invention.

What has been described herein is merely illustrative of the application of the principles of the present invention. Other arrangements and systems may be implemented by those skilled in the art without departing from the scope and spirit of this invention.

REFERENCES

N. Chen and D. Blostein. A survey of document image classification: problem statement, classifier architecture and performance evaluation. Int. J. Doc. Anal. Recognit., 10:1-16, May 2007.

H. Dejean and J.-L. Meunier. On tables of contents and how to recognize them. Int. J. Doc. Anal. Recognit., 12:1-20, May 2009.

A. Doucet, G. Kazai, B. Dresevic, A. Uzelac, B. Radakovic, and N. Todic. Setting up a competition framework for the evaluation of structure extraction from ocr-ed books. International Journal on Document Analysis and Recognition, 14:45-52, 2011. 10.1007/s10032-010-0127-3.

B. Dresevic, A. Uzelac, B. Radakovic, and N. Todic. Book Layout Analysis: TOC Structure Extraction Engine, pages 164-171. Springer-Verlag, Berlin, Heidelberg, 2009.

F. Esposito, D. Malerba, and F. A. Lisi. Machine learning for intelligent processing of printed documents. Journal of Intelligent Information Systems, 14:175-198, 2000. 10.1023/A:1008735902918.

J. Kim, D. X. Le, and G. R. Thoma. Automated labeling in document images. In Proc. SPIE: Document Recognition and Retrieval VIII, pages 111-122, 2001.

S. Klink and T. Kieninger. Rule-based document structure understanding with a fuzzy combination of layout and textual features. International Journal on Document Analysis and Recognition, 4:18-26, 2001. 10.1007/PL00013570.

M. Krishnamoorthy, G. Nagy, S. Seth, and M. Viswanathan. Syntactic segmentation and labeling of digitized pages from technical journals. IEEE Trans. Pattern Anal. Mach. Intell., 15:737-747, July 1993.

K. Laven, S. Leishman, and S. Roweis. A statistical learning approach to document image analysis. In Proceedings of the Eighth International Conference on Document Analysis and Recognition, ICDAR'05, pages 357-361, Washington, DC, USA, 2005. IEEE Computer Society.

C. Lin, Y. Niwa, and S. Narita. Logical structure analysis of book document images using contents information. In Proceedings of the 4th International Conference on Document Analysis and Recognition, ICDAR '97, pages 1048-1054, Washington, DC, USA, 1997. IEEE Computer Society.

E. H. Mamdani and S. Assilian. An experiment in linguistic synthesis with a fuzzy logic controller. Int. J.

Hum.-Comput. Stud., 51:135-147, August 1999.

S. Mao, A. Rosenfeld, and T. Kanungo. Document structure analysis algorithms: A literature survey, 2003.

A. Namboodiri and A. Jain. Document structure and layout analysis. In Digital Document Processing. 2007.

D. Niyogi and S. N. Srihari. Using domain knowledge to derive the logical structure of documents. In Proc. Document Recognition and Retrieval III, pages 114-125. SPIE, 1996.

T. Takagi and M. Sugeno. Fuzzy Identification of Systems and Its Applications to Modeling and Control. IEEE Transactions on Systems, Man, and Cybernetics, 15(1):116-132, Feb. 1985.

L. Vincent. Google book search: Document understanding on a massive scale. In Proceedings, IAPR 9th Int_S1 Conf. on Document Analysis and Recognition ICDARS 07, 2007.

L.-X. Wang and J. Mendel. Generating fuzzy rules by learning from examples. Systems, Man and Cybernetics, IEEE Transactions on, 22(6):1414-1427, 1992.

**Claims**

1. A method for generating a fuzzy rule base for classifying logical structure features of printed documents, comprising:

    a) providing (101) character recognition features from a certain printed document;
    b) for each line of the certain printed document, determining (102) a number of physical structure features on the basis of the provided character recognition features;
    c) for each line of the certain printed document, providing (103) training data including an input-output sample, wherein the input is represented by the number of physical structure features and the output is represented by a manually labelled logical structure feature;
    d) determining (104) a distribution for each physical structure feature in the certain printed document;
    e) for each line and for each physical structure feature, providing (105) fuzzy sets having linguistic variables and corresponding membership degrees on the basis of the respective calculated distribution;
    f) for each line and for each physical structure feature, selecting (106) the linguistic variable with the maximum membership degree; and
    g) for each line, generating (107) a fuzzy rule for the fuzzy rule base on the basis of the input-output frame, wherein the respective physical structure feature of the input is represented by the corresponding selected linguistic variable with its membership degree and the output is represented by the manually labelled logical structure feature.

2. The method of claim 1,
   wherein the fuzzy sets for the respective physical structure feature have a set of linguistic variables and corresponding membership functions being calculated on the basis of the respective distribution of the physical structure feature, wherein the respective membership degree of the respective linguistic variable is determined by applying the membership function to the respective determined physical structure feature in the respective line.

3. The method of claim 2,
   wherein, if the generated fuzzy rules include conflicting rules, the conflicting rules are resolved by means of a minimum T-norm.

4. The method of claim 3,
   wherein a rule degree $D_{rule}$ is calculated by the minimum T-norm $D_{rule}= min(m_{A1}(x_1), m_{A2}(x_2),..., m_{Aj}(x_i))$ for each conflicting rule,
   where $m_{Aj}(x_i)$ denotes the membership degree for the physical structure feature $x_i$ concerning the fuzzy set Aj .

5. The method of claim 4,
   wherein the generated fuzzy rules are If-Then-rules,
   wherein such conflicting rules having an equal If-part are grouped into one group,
   wherein, in each group, one conflicting rule of the grouped conflicting rules is selected for the fuzzy rule base based on a voting scheme.

6. The method of claim 5,
   wherein, within the voting scheme, each conflicting rule of the grouped conflicting rules votes for its Then-part with its calculated rule degree $D_{rule}$.

**7.** The method of claim 5 or 6,
wherein a precision value is calculated for the respective selected conflicting rule,
wherein the precision value corresponds to a quotient of the votes for the selected conflicting rules within the group and a total number of votes within the group.

**8.** The method of one of claims 1 to 7,
wherein the number of physical structure features for each line includes a distance to the previous line, a distance to the subsequent line, a left indent of the line, a centering of the line, a length of the line, a number of lines within the same text block, a distance of the text block containing the line to the previous text block, a distance of the text block containing the line to the subsequent text block, and an average surface area of a character within the line.

**9.** The method of one of claims 1 to 8,
wherein the logical structure features include a page number, a page header, a signature-mark, a text, a foot note and a heading.

**10.** A device (400) for generating a fuzzy rule base for classifying logical structure features of printed documents, comprising:

a) first means (401) for providing character recognition features from a certain printed document;
b) second means (402) for determining a number of physical structure features on the basis of the provided character recognition features for each line of the certain printed document;
c) third means (403) for providing training data including an input-output sample for each line of the certain printed document, wherein the input is represented by the number of physical structure features and the output is represented by a manually labelled logical structure feature;
d) fourth means (404) for determining a distribution for each physical structure feature in the certain printed document;
e) fifth means (405) for providing fuzzy sets having linguistic variables and corresponding membership degrees on the basis of the respective calculated distribution for each line and for each physical structure feature;
f) sixth means (406) for selecting the linguistic variable with the maximum membership degree for each line and for each physical structure feature; and
g) seventh means (407) for generating a fuzzy rule for the fuzzy rule base on the basis of the input-output frame for each line, wherein the respective physical structure feature of the input is represented by the corresponding selected linguistic variable with its membership degree and the output is represented by the manually labelled logical structure feature.

**11.** A method for classifying a particular printed document by logical structure features, comprising:

a) generating (501) a fuzzy rule base including fuzzy rules according to one of claims 1 to 9,
b) providing (502) character recognition features from the particular document,
c) determining (503) a distribution for each physical structure feature in the particular printed document;
d) for each line and for each physical structure feature, providing (504) fuzzy sets with the linguistic variables and the corresponding membership degrees on the basis of the respective calculated distribution;
e) providing (505) each line of the particular printed document with one label for each of the logical structure features; and
f) for each line, selecting (506) one label of the provided labels based on physical layout data on the logical structure features and a voting procedure within each paragraph of the particular document.

**12.** The method of claim 11, wherein providing each line of the particular printed document with one label for each of the logical structure features includes:

e1) for each line and for fuzzy rule, calculating the rule degree by the minimum T-norm of each fuzzy rule;
e2) for each line and for each label, calculating a confidence value of the label based on the calculated rule degree and the precision value of the fuzzy rule; and
e3) for each line and for each label, selecting the label with the calculated maximum confidence value.

**13.** The method of claim 11 or 12,
wherein the physical layout data on the logical structure features is generated in dependence on the provided character recognition features.

**14.** The method of one of claims 11 to 13,
wherein, for each line, one label of the provided labels is selected based on the physical layout data on the logical structure features, the voting procedure within each paragraph of the particular printed document and on a Deterministic Finite Automaton (DFA) providing allowed sequences of logical structure features.

**15.** A device (600) for classifying a particular printed document by logical structure features, comprising:

a) a device (400) for generating a fuzzy rule base including fuzzy rules according to claims 10,
b) a first entity (601) for providing character recognition features from the particular document,
c) a second entity (602) for determining a distribution for each physical structure feature in the particular printed document;
d) a third entity (603) for providing the fuzzy sets with the linguistic variables and the corresponding membership degrees on the basis of the respective calculated distribution for each line and for each physical structure feature;
e) a fourth entity (604) for providing each line of the particular printed document with one label for each of the logical structure features; and
f) a fifth entity (605) for selecting one label of the provided labels based on physical layout data on the logical structure features and a voting procedure within each paragraph of the particular document for each line.

```
┌──────────────┐
│              │────── 101
└──────┬───────┘
       │
       ▼
┌──────────────┐
│              │────── 102
└──────┬───────┘
       │
       ▼
┌──────────────┐
│              │────── 103
└──────┬───────┘
       │
       ▼
┌──────────────┐
│              │────── 104
└──────┬───────┘
       │
       ▼
┌──────────────┐
│              │────── 105
└──────┬───────┘
       │
       ▼
┌──────────────┐
│              │────── 106
└──────┬───────┘
       │
       ▼
┌──────────────┐
│              │────── 107
└──────────────┘
```

Fig. 1

Fig. 2

Fig. 3

400

401  402  403  404  405  406  407

Fig. 4

501

502

503

504

505

506

Fig. 5

600

400    601    602    603    604    605

Fig. 6

Europäisches
Patentamt

European
Patent Office

Office européen
des brevets

# EUROPEAN SEARCH REPORT

Application Number

EP 11 17 9683

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | Stefan Klink ET AL: "Rule-based Document Structure Understanding with a Fuzzy Combination of Layout and Textual Features", International Journal of Document Analysis and Recognition, 1 January 2001 (2001-01-01), XP55015513, Retrieved from the Internet: URL:http://citeseerx.ist.psu.edu/viewdoc/download?doi=10.1.1.28.4808&rep=rep1&type=pdf [retrieved on 2011-12-29] | 1,5,7, 9-11, 13-15 | INV. G06F17/30 G06K9/20 |
| Y | * the whole document * | 2-4,6,12 | |
| Y | ZADEH ET AL: "Fuzzy sets", INFORMATION AND CONTROL, ACADEMIC PRESS, NEW YORK, NY, US, vol. 8, no. 3, 1 June 1965 (1965-06-01), pages 338-353, XP024889529, ISSN: 0019-9958, DOI: 10.1016/S0019-9958(65)90241-X [retrieved on 1965-06-01] * the whole document * | 2,3 | |
| | | | TECHNICAL FIELDS SEARCHED (IPC) |
| | | | G06F G06K |
| Y | AJOY K PALIT ET AL: "Chapter 4: Fuzzy logic approach", 1 January 2005 (2005-01-01), COMPUTATIONAL INTELLIGENCE IN TIME SERIES FORECASTING: THEORY AND ENGINEERING APPLICATIONS, SPRINGER, UK, PAGE(S) 143 - 194, XP008146989, ISBN: 978-1-85233-948-7 [retrieved on 2006-01-04] * page 157, line 166 * | 4,6,12 | |

-/--

The present search report has been drawn up for all claims

| Place of search | Date of completion of the search | Examiner |
|---|---|---|
| The Hague | 24 January 2012 | Winne, Dominique |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 11 17 9683

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KIENINGER T ET AL: "An Approach towards Benchmarking of Table Structure Recognition Results", EIGHTS INTERNATIONAL PROCEEDINGS ON DOCUMENT ANALYSIS AND RECOGNITION,, 31 August 2005 (2005-08-31), pages 1232-1236, XP010878278, DOI: 10.1109/ICDAR.2005.47 ISBN: 978-0-7695-2420-7 * the whole document * | 7 | |
| L | Lukas Gander ET AL: "Rule based document understanding of historical books using a hybrid fuzzy classification system", Proceedings of the 2011 Workshop on Historical Document Imaging and Processing, 16 September 2011 (2011-09-16), XP55015517, DOI: 10.1145/2037342.2037358 ISBN: 978-1-45-030916-5 Retrieved from the Internet: URL:http://delivery.acm.org/10.1145/204000 0/2037358/p91-gander.pdf?ip=145.64.134.241 &acc=ACTIVE SERVICE&CFID=59984795&CFTOKEN=10426657&__a cm__=1325164335_10b2021eec163ad983c11e7959 489d3c [retrieved on 2011-12-29] * the whole document * | 1-15 | |

| | | TECHNICAL FIELDS SEARCHED (IPC) |
|---|---|---|

The present search report has been drawn up for all claims

| Place of search | Date of completion of the search | Examiner |
|---|---|---|
| The Hague | 24 January 2012 | Winne, Dominique |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

      

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N. CHEN ; D. BLOSTEIN.** A survey of document image classification: problem statement, classifier architecture and performance evaluation. *Int. J. Doc. Anal. Recognit.,* May 2007, vol. 10, 1-16
- **H. DEJEAN ; J.-L. MEUNIER.** On tables of contents and how to recognize them. *Int. J. Doc. Anal. Recognit.,* May 2009, vol. 12, 1-20
- **A. DOUCET ; G. KAZAI ; B. DRESEVIC ; A. UZELAC ; B. RADAKOVIC ; N. TODIC.** Setting up a competition framework for the evaluation of structure extraction from ocr-ed books. *International Journal on Document Analysis and Recognition,* 2011, vol. 14, 45-52
- **B. DRESEVIC ; A. UZELAC ; B. RADAKOVIC ; N. TODIC.** Book Layout Analysis: TOC Structure Extraction Engine. Springer-Verlag, 2009, 164-171
- **F. ESPOSITO ; D. MALERBA ; F. A. LISI.** Machine learning for intelligent processing of printed documents. *Journal of Intelligent Information Systems,* 2000, vol. 14, 175-198
- **J. KIM ; D. X. LE ; G. R. THOMA.** Automated labeling in document images. *Proc. SPIE: Document Recognition and Retrieval VIII,* 2001, 111-122
- **S. KLINK ; T. KIENINGER.** Rule-based document structure understanding with a fuzzy combination of layout and textual features. *International Journal on Document Analysis and Recognition,* 2001, vol. 4, 18-26
- **M. KRISHNAMOORTHY ; G. NAGY ; S. SETH ; M. VISWANATHAN.** Syntactic segmentation and labeling of digitized pages from technical journals. *IEEE Trans. Pattern Anal. Mach. Intell.,* July 1993, vol. 15, 737-747
- **K. LAVEN ; S. LEISHMAN ; S. ROWEIS.** A statistical learning approach to document image analysis. *Proceedings of the Eighth International Conference on Document Analysis and Recognition, ICDAR'05,* 2005, 357-361
- **C. LIN ; Y. NIWA ; S. NARITA.** Logical structure analysis of book document images using contents information. *Proceedings of the 4th International Conference on Document Analysis and Recognition, ICDAR '97,* 1997, 1048-1054
- **E. H. MAMDANI ; S. ASSILIAN.** An experiment in linguistic synthesis with a fuzzy logic controller. *Int. J. Hum.-Comput. Stud.,* August 1999, vol. 51, 135-147
- **S. MAO ; A. ROSENFELD ; T. KANUNGO.** *Document structure analysis algorithms: A literature survey,* 2003
- **A. NAMBOODIRI ; A. JAIN.** Document structure and layout analysis. *Digital Document Processing,* 2007
- **D. NIYOGI ; S. N. SRIHARI.** Using domain knowledge to derive the logical structure of documents. *Proc. Document Recognition and Retrieval III,* 1996, 114-125
- **T. TAKAGI ; M. SUGENO.** Fuzzy Identification of Systems and Its Applications to Modeling and Control. *IEEE Transactions on Systems, Man, and Cybernetics,* February 1985, vol. 15 (1), 116-132
- **L. VINCENT.** Google book search: Document understanding on a massive scale. *Proceedings, IAPR 9th Int_S1 Conf. on Document Analysis and Recognition ICDARS 07,* 2007
- **L.-X. WANG ; J. MENDEL.** Generating fuzzy rules by learning from examples. Systems, Man and Cybernetics. *IEEE Transactions,* 1992, vol. 22 (6), 1414-1427